# EUROPEAN PATENT SPECIFICATION

(11) **EP 3 040 260 B1**
(45) Date of publication and mention of the grant of the patent: **11.03.2020**
(21) Application number: 14839732.6
(22) Date of filing: 27.08.2014
(51) Int. Cl.: B62L 3/08, B60T 11/04, B60T 11/18, B62L 3/02, B60T 11/10, B60T 7/10, B60T 8/26

(54) **BRAKE DEVICE FOR VEHICLE THAT HAS HANDLEBARS**
BREMSVORRICHTUNG FÜR EIN FAHRZEUG MIT GRIFFSTANGEN
DISPOSITIF DE FREIN POUR VÉHICULE MUNI DE GUIDONS

(30) Priority: 29.08.2013 JP 2013177883
(43) Date of publication of application: 06.07.2016
(73) Proprietor: Nissin Kogyo Co., Ltd., Tomi-city Nagano 389-0514 (JP)
(72) Inventor: UEHARA, Kazumasa, Tomi-city Nagano 389-0514 (JP)
(74) Representative: Hoefer & Partner Patentanwälte mbB
(86) International application number: PCT/JP2014/072360
(87) International publication number: WO 2015/030026

(56) References cited:
- DE-A1-102009 009 269
- JP-A- H1 191 673
- JP-A- 2001 171 506
- JP-A- 2002 220 077

## Description

### Technical Field

The present invention relates to a brake device for a vehicle with handle bars, and more particularly to a brake device for a bar handle vehicle where either one of a front wheel brake and a rear wheel brake is formed of a hydraulic brake and the other brake is formed of a mechanical brake, the hydraulic brake is operated singly by operating a first brake operator, and the hydraulic brake and the mechanical brake are operated in an interlocking manner by operating a second brake operator.

### Background Art

Conventionally, there has been known a brake device where at least one of a front wheel brake and a rear wheel brake is formed of a hydraulic brake, and the hydraulic brake is operated by operating a first brake operator through a master cylinder unit formed by combining a hydraulic master cylinder and a lever mechanism with each other. As such a master cylinder unit, there has been known a combination of a master cylinder and a lever mechanism. The lever mechanism includes four levers consisting of a first rotary lever, a second rotary lever, a knocker lever and an equalizer lever. The hydraulic brake on one side is operated by the first rotary lever and the knocker rotated by operating the first brake operator, and both brakes are operated in an interlocking manner by an equalizer lever, the second rotary lever and the knocker (see patent literature 1, for example) rotated by operating the second brake operator.

### Citation List

### Patent Literature

PTL 1: Japanese Patent 4532753

### Summary of Invention

### Technical Problem

In the above-mentioned patent literature, in operating both brakes in an interlocking manner, to operate the front wheel brake with a delay compared to an operation of the rear wheel brake, a delay spring which biases the second rotary lever about a rotary fulcrum in a non-operating direction is provided between the second rotary lever and a cylinder body. A body contact portion is formed on a distal end side of the second rotary lever, and an initial position of the second rotary lever is set by bringing the body contact portion into contact with an outer side surface of the cylinder body.

With the above-mentioned structure, however, when the second rotary lever is rotated about the rotary fulcrum at the time of operating the second rotary lever, the other end side of the second rotary lever which projects toward the outside of the cylinder body largely projects to an outer peripheral side of the cylinder body. Accordingly, the master cylinder unit becomes large-sized. Further, there is a possibility that the distal end side of the second rotary lever is brought into contact with other parts during the operation so that the arrangement of the master cylinder unit is restricted.

Accordingly, it is an object of the present invention to provide a brake device for a vehicle with handle bars which can realize the miniaturization of a master cylinder unit and, at the same time, can enhance the degree of freedom in layout of the master cylinder unit.

### Solution to Problem

To achieve the above-mentioned object, the present invention is directed to a brake device for a vehicle with handle bars where either one of a front wheel brake and a rear wheel brake is formed of a hydraulic brake and the other brake is formed of a mechanical brake, the hydraulic brake is operated singly by operating a first brake operator by means of a master cylinder unit formed by combining a hydraulic master cylinder and a lever mechanism, the hydraulic brake and the mechanical brake are operated in an interlocking manner by operating a second brake operator by means of the master cylinder unit, the lever mechanism includes a first rotary lever, a second rotary lever, a knocker and an equalizer lever, a first brake connecting means connected to the first brake operator is connected to the first rotary lever, a piston of the hydraulic master cylinder is operated by operating the first brake operator by means of the knocker which the first rotary lever moves by pushing thus singly operating the hydraulic brake, a second brake connecting means connected to the second brake operator, a mechanical brake side connecting means connected to the mechanical brake and the second rotary lever are connected to the equalizer lever, the mechanical brake side connecting means is towed by operating the second brake operator by means of the equalizer lever thus operating the mechanical brake, and the equalizer lever rotates the second rotary lever so that the piston of the hydraulic master cylinder is operated by means of the knocker which the second rotary lever moves by pushing thus operating the hydraulic brake in an interlocking manner with the mechanical brake, wherein
a guide portion which guides the mechanical brake side connecting means toward the equalizer lever is mounted on a cylinder body of the hydraulic master cylinder in a projecting manner, a second rotary lever contact surface brought into contact with the second rotary lever is formed on a cylinder body center axis side of the guide portion, the second rotary lever is biased so as to rotate in a non-operating direction about a fixing pin which forms a rotational fulcrum due to a repulsive force of a delay spring disposed between the second rotary lever and the cylinder body, and a guide portion contact surface which sets an initial position of the second rotary lever by coming into contact with the second rotary lever contact surface is formed on the second rotary lever.

It is preferable that a lever holder which rotatably and pivotally supports the first rotary lever, the second rotary lever and the knocker by means of the fixing pin be mounted on a cylinder hole opening side of the cylinder body in a projecting manner, and the guide portion be formed on a projecting side end portion of the lever holder. Further, it is preferable that the hydraulic master cylinder be a plunger-type hydraulic master cylinder.

### Advantageous Effects of Invention

According to the brake device for a vehicle with handle bars of the present invention, the guide portion which guides the mechanical brake side connecting means toward the equalizer lever is mounted on the cylinder body of the hydraulic master cylinder in a projecting manner, the second rotary lever contact surface brought into contact with the second rotary lever is formed on a cylinder body center axis side of the guide portion, the second rotary lever is biased so as to rotate in a non-operating direction about the fixing pin which forms a rotational fulcrum due to a repulsive force of the delay spring disposed between the second rotary lever and the cylinder body, and the guide portion contact surface which sets an initial position of the second rotary lever by being brought into contact with the second rotary lever contact surface is formed on the second rotary lever. With such a configuration, even when the second rotary lever is rotated about the fixing pin at the time of operating the brake device, there is no possibility that a distal end side of the second rotary lever projects toward an outer peripheral side of the cylinder body and hence, the miniaturization of the master cylinder unit can be realized. Further, there is no possibility that the distal end side of the second rotary lever is brought into contact with other parts at the time of operating the brake device and hence, the degree of freedom in layout of the master cylinder unit can be enhanced.

Further, the lever holder which rotatably and pivotally supports the first rotary lever, the second rotary lever and the knocker by means of the fixing pin is mounted on a cylinder hole opening side of the cylinder body in a projecting manner, and the guide portion is formed on a projecting side end portion of the lever holder. With such a configuration, the first rotary lever, the second rotary lever, the knocker, and the guide portion can be arranged in a state where these parts are disposed close to a cylinder hole opening side and hence, the miniaturization of the master cylinder unit can be realized. Further, the hydraulic master cylinder is a plunger-type hydraulic master cylinder. With such a configuration, a length of the cylinder body in a cylinder center axis direction can be decreased, and the further miniaturization of the master cylinder unit can be realized.

### Brief Description of Drawings

[Fig. 1] Fig. 1 is a system view of a brake device for a vehicle showing one embodiment of the present invention.
[Fig. 2] Fig. 2 is a front view of a master cylinder unit of the brake device for a vehicle.
[Fig. 3] Fig. 3 is a back view of the master cylinder unit of the brake device for a vehicle.
[Fig. 4] Fig. 4 is a right side view with a part in cross section of the master cylinder unit of the brake device for a vehicle.
[Fig. 5] Fig. 5 is a left side view with a part in cross section of the master cylinder unit of the brake device for a vehicle.
[Fig. 6] Fig. 6 is a plan view of the master cylinder unit of the brake device for a vehicle.
[Fig. 7] Fig. 7 is a bottom view of the master cylinder unit of the brake device for a vehicle.
[Fig. 8] Fig. 8 is a cross-sectional view taken along a line VIII-VIII in Fig. 5.
[Fig. 9] Fig. 9 is a perspective view of a front side of the master cylinder unit showing an embodiment of the present invention.
[Fig. 10] Fig. 10 is a perspective view of a back side of the hydraulic master cylinder unit.
[Fig. 11] Fig. 11 is a back view with a part in cross section of the master cylinder unit in a state where only a first operation lever is operated so as to operate only a hydraulic brake.
[Fig. 12] Fig. 12 is a front view of the master cylinder unit brought into an interlocking state by operating only a second operation lever.
[Fig. 13] Fig. 13 is a front view of the master cylinder unit in a state where an operation of the hydraulic brake is restricted by operating only the second operation lever.
[Fig. 14] Fig. 14 is a back view with a part in cross section of the master cylinder unit in a state where only the second operation lever is operated so as to restrict an operation of a hydraulic brake.
[Fig. 15] Fig. 15 is a front view of the master cylinder unit when both operation levers are operated.
[Fig. 16] Fig. 16 is a back view with a part in cross section of the master cylinder unit when both operation levers are operated.
[Fig. 17] Fig. 17 is an exploded perspective view of the master cylinder unit.

### Description of Embodiment

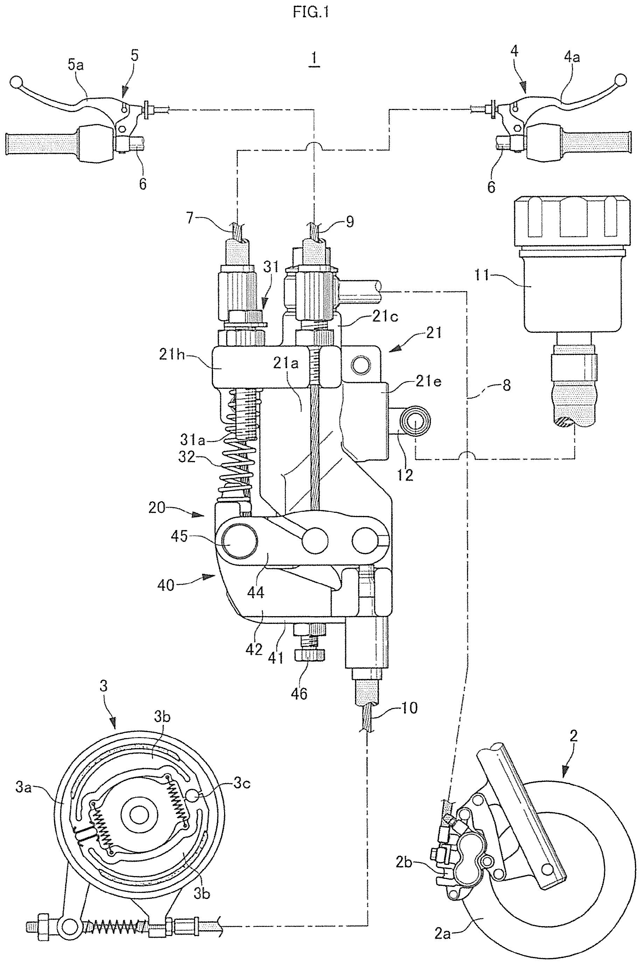

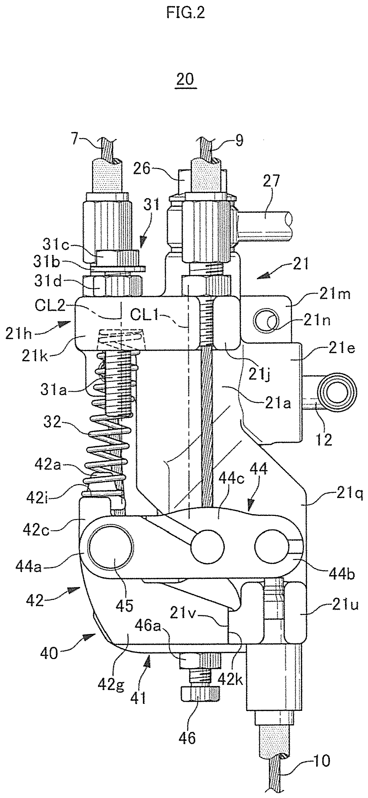

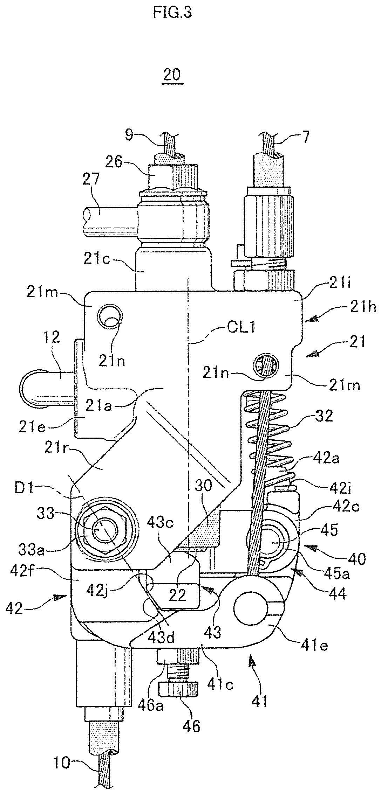

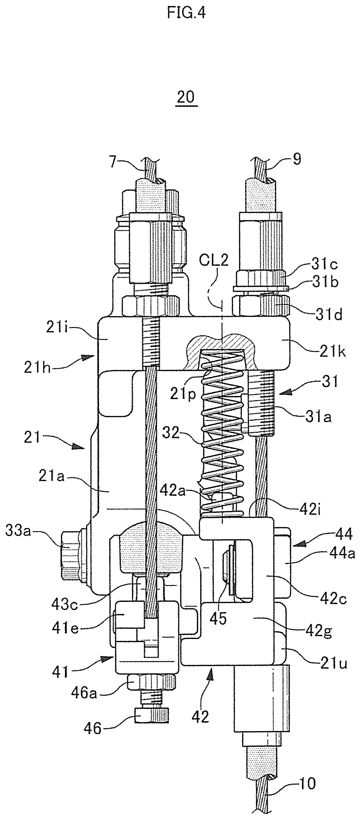

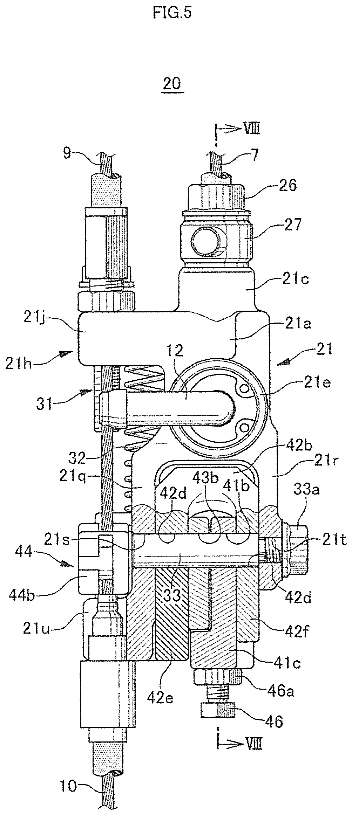

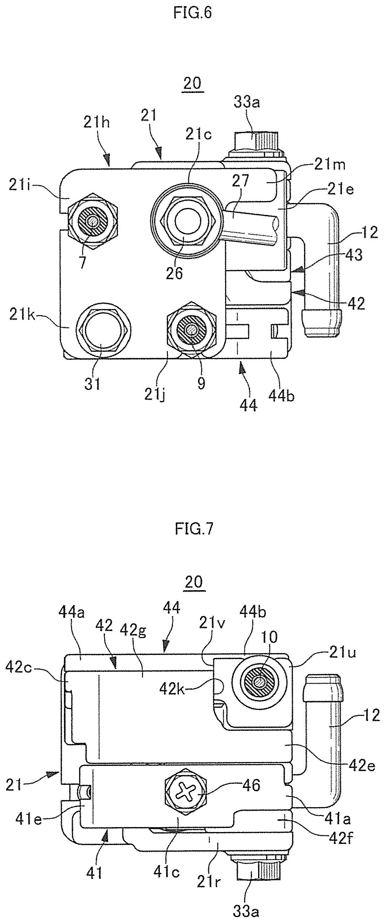

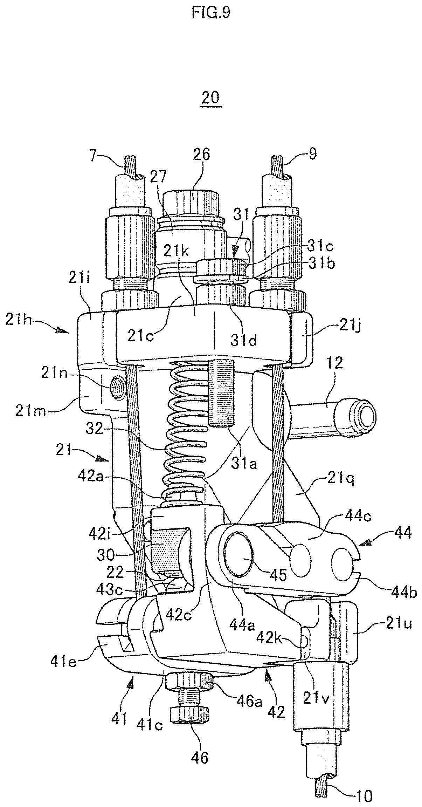

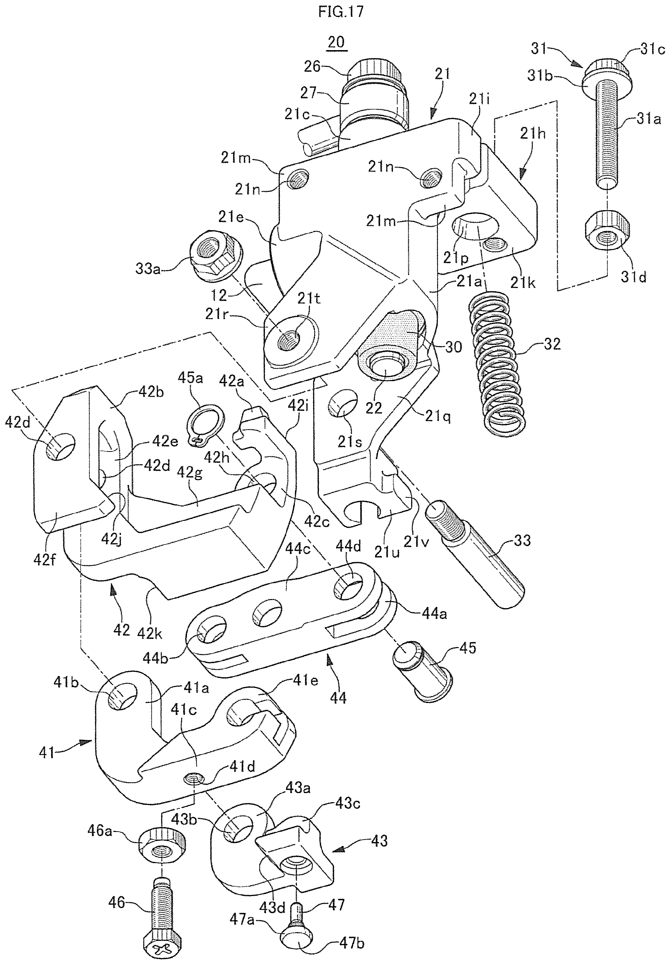

Fig. 1 to Fig. 17 show one embodiment of a brake device for a vehicle of the present invention. As shown in Fig. 1, a brake device 1 for a vehicle of this embodiment includes: a front wheel brake 2 and a rear wheel brake 3; a front-wheel-brake-use operator 4 (first brake operator of the present invention) ; and a rear-wheel-brake-use operator 5 (second brake operator of the present invention) . A master cylinder unit 20 is interposed between the front wheel brake 2 and the front-wheel-brake-use operator 4 and between the rear wheel brake 3 and the rear-wheel-brake-use operator 5.

In the explanation of the master cylinder unit made hereinafter, a left side and a right side are a left side and a right side as viewed in a front view from a driver's side as shown in Fig. 1. Accordingly, the explanation is made by assuming a front-wheel-brake-use operator 4 side as a right side and a rear-wheel-brake-use operator 5 side as a left side. Further, the description relating to a clockwise direction and a counterclockwise direction is also made by assuming these directions as directions as viewed in a front view in the same manner as described above.

As the front wheel brake 2, a hydraulic disk brake is used where a caliper body 2b provided with a piston is combined with a disc rotor 2a which rotates integrally with a front wheel. As the rear wheel brake 3, a mechanical drum brake is used where a pair of brake shoes 3b, 3b is arranged on a back plate 3a in an expandable and opposedly facing manner, and both brake shoes 3b, 3b can be expanded using an anchor pin 3c as a fulcrum.

With respect to the front-wheel-brake-use operator 4, when the operation lever 4a mounted on a handle bar 6 is operated, a first brake wire 7 is towed so that a hydraulic master cylinder 21 of the master cylinder unit 20 is operated whereby a hydraulic pressure is supplied to the front wheel brake 2 through a hydraulic pressure pipe 8 thus operating the front wheel brake 2 singly.

With respect to the rear-wheel-brake-use operator 5, when the operation lever 5a mounted on the handle bar 6 is operated, a second brake wire 9 (second brake connecting means of the present invention) is towed so that a rear-wheel-use brake wire 10 (mechanical-brake-side connecting means of the present invention) which operates the rear wheel brake 3 is towed through the master cylinder unit 20 whereby the rear wheel brake 3 is operated. Towing of the second brake wire 9 also operates a hydraulic master cylinder 21 of the master cylinder unit 20 so that a hydraulic pressure is supplied to the front wheel brake 2 through the hydraulic pressure pipe 8 thus operating the front wheel brake 2 in an interlocking manner with the operation of the rear wheel brake 3.

The master cylinder unit 20 is formed by combining the hydraulic master cylinder 21 which supplies a hydraulic pressure to the front wheel brake 2 and a lever mechanism 40. The lever mechanism 40 includes a first rotary lever 41, a second rotary lever 42, a knocker 43 and an equalizer lever 44.

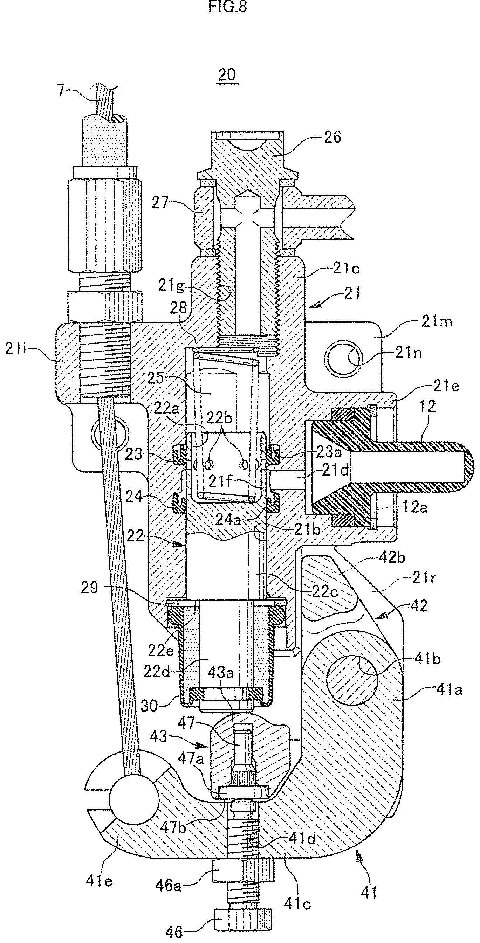

In the hydraulic master cylinder 21 (see figure 8), a bottomed cylinder hole 21b is formed in a cylinder body 21a with an open lower end, and a union boss portion 21c is formed on a bottom portion side of the cylinder hole 21b in a projecting manner. A boss portion 21e provided with a fluid through hole 21d which communicates with the cylinder hole 21b is formed on a right side of the cylinder body 21a in a projecting manner. A connector 12 connected to a reservoir 11 by means of a seal member 12a is mounted on the boss portion 21e. As shown in Fig. 8, a plunger 22 (piston of the present invention) is slidably inserted into the cylinder hole 21b by means of a first cup seal 23 and a second cup seal 24. The first cup seal 23 is fitted in a first seal groove 23a formed on an inner peripheral surface of the cylinder hole 21b on a side closer to a cylinder hole bottom portion than the fluid through hole 21d and adjacently to the fluid through hole 21d. The second cup seal 24 is fitted in a second seal groove 24a formed on the inner peripheral surface of the cylinder hole 21b on a side closer to a cylinder hole opening than the fluid through hole 21d and adjacently to the fluid through hole 21d. A hydraulic pressure chamber 25 is defined between a bottom portion of the cylinder hole 21b and the first cup seal 23. A replenishing chamber 21f which communicates with the first seal groove 23a, the second seal groove 24a and the fluid through hole 21d is formed on the inner peripheral surface of the cylinder hole 21b between the first seal groove 23a and the second seal groove 24a. A union hole 21g which opens in a bottom portion of the cylinder hole is formed in the union boss portion 21c. The hydraulic pressure pipe 8 is connected to the union boss portion 21c by means of a banjo bolt 26 and a banjo 27 mounted in the union hole 21g. The cylinder hole 21b and a caliper body 2b of the front wheel brake 2 communicate with each other through the hydraulic pressure pipe 8.

The plunger 22 is formed of a bottomed cylindrical shape having a recessed portion 22a which opens on a cylinder hole bottom portion side. In a peripheral wall of the plunger 22 on a recessed portion opening side, a plurality of communication ports 22b having a small diameter which penetrate the peripheral wall so as to communicate the inside and the outside of the peripheral wall with each other and make the hydraulic pressure chamber 25 and the replenishing chamber 21f communicate with each other at an initial position in a non-operative state are formed in a circumferential direction. Between a bottom surface of the recessed portion 22a of the plunger 22 and a bottom surface of the cylinder hole 21b, a return spring 28 which makes the plunger 22 in a non-operative state return to a preset predetermined initial position is disposed. In the plunger 22, a small-diameter shaft portion 22d is formed on a sleeve portion 22c which slides in the cylinder hole 21b on a cylinder hole opening side. By bringing a stepped portion 22e formed between the small-diameter shaft portion 22d and the sleeve portion 22c into contact with a circlip 29 fitted on a large-diameter portion formed on a lower end side of the cylinder hole 21b, the initial position of the plunger 22 is set. Further, the plunger 22 is configured such that the small-diameter shaft portion 22d projects downward from a lower end opening of the cylinder body 21a, and a dustproof boot 30 is mounted between a distal end portion of the small-diameter shaft portion 22d and an outer surface of the circlip 29.

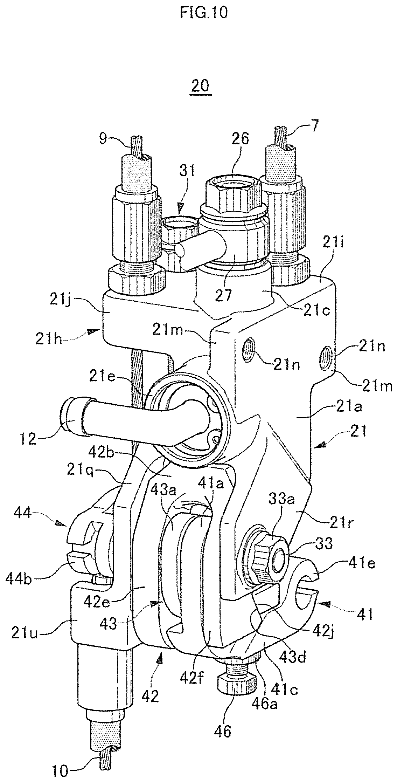

On an upper wall of the cylinder body 21a, an upper bracket 21h having a rectangular shape as viewed in a plan view is formed in a projecting manner toward a front side and a left side of the upper wall (see figure 10). The union boss portion 21c is arranged on a back surface side and a right side of the upper bracket 21h. A first wire guide portion 21i which guides the first brake wire 7 is arranged on a left side of the union boss portion 21c. A second wire guide portion 21j which guides the second brake wire 9 is arranged on a front side of the union boss portion 21c. A stopper bolt mounting portion 21k on which a stopper bolt 31 for restricting the rotation of the second rotary lever 42 is mounted is arranged on a left side of the second wire guide portion 21j. Vehicle body mounting brackets 21m, 21m which project toward a right side and a left lower side are formed on a back surface side of the upper bracket 21h in a projecting manner. A bolt hole 21n in which a vehicle body mounting bolt is mounted is formed in the vehicle body mounting brackets 21m, 21m respectively in a direction orthogonal to a cylinder center axis CL1. Further, in a lower surface of the upper bracket 21h disposed between the first wire guide portion 21i and the stopper bolt mounting portion 21k, a spring mounting hole 21p in which a delay spring 32 is mounted is formed.

A pair of lever holders 21q, 21r is formed in a projecting manner on the cylinder body 21a on a front side and a back side in the vicinity of the cylinder hole opening portion. A through hole 21s and a female threaded hole 21t in which a fixing pin 33 is mounted are coaxially formed in the lever holders 21q, 21r. A rear-wheel-use brake wire guide portion 21u (guide portion of the present invention) is formed in a projecting manner on a lower end portion of the lever holder 21q on a front side. A second rotary lever contact surface 21v which sets an initial position of the second rotary lever 42 by coming into contact with the second rotary lever 42 is formed on a left side surface (a side surface on a cylinder body center axis side of the present invention) of the rear-wheel-use brake wire guide portion 21u.

The stopper bolt 31 includes a shaft portion 31a provided with a male threaded portion, and a head portion 31c having a large-diameter seat surface 31b. The stopper bolt 31 is fixed using a nut member 31d in a state where the stopper bolt 31 is threaded into a female threaded hole formed in a stopper bolt mounting portion 21k, and the shaft portion 31a projects downward from the upper bracket 21h by a predetermined length.

In the lever mechanism 40, a bifurcated second rotary base portion 42b which is formed on the second rotary lever 42 is arranged between the lever holders 21q, 21r. A third rotary base portion 43a formed on the knocker 43 is arranged on a front side of an inner side of the second rotary base portion 42b. A first rotary base portion 41a formed on the first rotary lever 41 is arranged on a back surface side of the second rotary base portion 42b. The fixing pin 33 is inserted into and over the lever holders 21q, 21r, the first rotary base portion 41a, the second rotary base portion 42b and the third rotary base portion 43a, and the fixing pin 33 is fixed using a nut member 33a. Due to such a configuration, the first rotary lever 41, the second rotary lever 42 and the knocker 43 are rotatably connected to the lever holders 21q, 21r by the following configuration. Further, on a front side of the lever holder 21q, an equalizer 44 is arranged above the rear-wheel-use brake wire guide portion 21u. An equalizer connecting arm 42c formed on the second rotary lever 42 and a second rotary lever connecting portion 44a formed on a left end portion of the equalizer lever 44 are rotatably and pivotally supported by means of a connecting pin 45 and a retainer ring 45a.

The first rotary lever 41 is configured such that an adjustment bolt mounting portion 41c extends downward to an opening portion of the cylinder hole 21b from the first rotary base portion 41a provided with an insertion hole 41b for the fixing pin 33, an adjustment bolt 46 which comes into contact with the knocker 43 is mounted on a female threaded portion 41d of the adjustment bolt mounting portion 41c such that a projecting amount of the adjustment bolt 46 is adjustable using a nut member 46a. A first brake wire connecting portion 41e to which an end portion of the first brake wire 7 is connected is formed on a back surface side of the adjustment bolt mounting portion 41c.

The second rotary lever 42 is formed into a block shape, and includes: the second rotary base portion 42d formed in a bifurcated shape and having a front side arm portion 42e and a back side arm portion 42f provided with an insertion hole 42d for the fixing pin 33 respectively; a connecting arm 42g projecting toward a front surface direction and extending in a left direction from a lower portion of the front side arm portion 42e; and an equalizer connecting arm 42c projecting upward from a left end portion of the connecting arm 42g. An insertion hole 42h for the connecting pin 45 is formed in the equalizer connecting arm 42c. A delay spring mounting portion 42i projecting in a back surface direction at a right angle is formed on an upper end portion of the equalizer connecting arm 42c in a projecting manner. The spring mounting boss 42a projecting toward the upper bracket 21h is formed on an upper surface of the delay spring mounting portion 42i in a projecting manner. A knocker pushing and moving surface 42j coming into contact with the knocker 43 and moving the knocker 43 by pushing is formed on a left lower portion of the back side arm portion 42f. Further, a guide portion contact surface 42k is formed on an outer surface of a right end of the connecting arm 42g. The guide portion contact surface 42k comes into contact with a second rotary lever contact surface 21v formed on the rear-wheel-use brake wire guide portion 21u so as to set an initial position of the second rotary lever 42.

The delay spring 32 is formed of a compression-type coil spring. An upper end side of the delay spring 32 is mounted in the spring mounting hole 21p formed in the upper bracket 21h, and a lower end side of the delay spring 32 is mounted on the spring mounting boss 42a of the second rotary lever 42.

The knocker 43 is configured such that a plunger pushing and moving portion 43c which is constantly brought into contact with a lower end portion of the plunger 22 is formed on a left side of the third rotary base portion 43a provided with an insertion hole 43b for the fixing pin 33. A head portion 47a of a pin member 47 embedded in the knocker 43 is arranged on a lower surface of the plunger pushing and moving portion 43c, and an outer end surface of the head portion 47a forms an adjustment bolt contact surface 47b which is brought into contact with the adjustment bolt 46. On a back surface side of the adjustment bolt contact surface 47b, a receiving surface 43d which is pushed and moved by the knocker pushing and moving surface 42j formed on the second rotary lever 42 is brought into contact with the knocker pushing and moving surface 42j with a slight clearance therebetween.

The equalizer lever 44 is arranged on a front side of the cylinder body 21a. A rear-wheel-use brake wire connecting portion 44b to which the rear-wheel-use brake wire 10 is connected is formed on one end portion of the equalizer lever 44. A second brake wire connecting portion 44c to which the second brake wire 9 is connected is formed on a center portion of the equalizer lever 44. The second rotary lever connecting portion 44a which is connected to the equalizer connecting arm 42c of the second rotary lever 42 is formed on the other end portion of the equalizer lever 44. The second rotary lever connecting portion 44a is formed into a bifurcated shape where an insertion hole 44d of the connecting pin 45 is formed in the bifurcated portions respectively. The second rotary lever connecting portion 44a is rotatably connected to the equalizer connecting arm 42c by inserting the equalizer connecting arm 42c between portions of the second rotary lever connecting portion 44a, by inserting the connecting pin 45 into the insertion holes 44d, 44h and by mounting the retainer ring 45a on the connecting pin 45.

The above-mentioned first rotary lever 41, second rotary lever 42, and knocker 43 are respectively rotatably connected between the lever holders 21q, 21r. The second rotary lever connecting portion 44a of the equalizer lever 44 is connected to the equalizer connecting arm 42c of the second rotary lever 42 by means of the connecting pin 45. The rear-wheel-use brake wire 10 which is towed by means of the rear-wheel-use brake wire guide portion 21u is connected to the rear-wheel-use brake wire connecting portion 44b of the equalizer lever 44, and the second brake wire 9 which is towed by means of the second wire guide portion 21j is connected to the second brake wire connecting portion 44c. The first brake wire 7 which is towed by means of the first wire guide portion 21i is connected to the first brake wire connecting portion 41e of the first rotary lever 41. The spring mounting boss 42a of the second rotary lever 42 is arranged on a left side of a center axis CL2 of the spring mounting hole 21p formed in the upper bracket 21h which is an outer peripheral side of the cylinder body. One end of the delay spring 32 is fitted into the inside of the spring mounting hole 21p, and the other end of the delay spring 32 is inserted into the spring mounting boss 42a. With such a configuration, as viewed in a front view, the delay spring 32 is arranged such that a lower end side of the delay spring 32 is inclined leftwardly, that is, in an outer peripheral direction of the cylinder body, with respect to the center axis CL2 of the spring mounting hole 21p.

In the master cylinder unit 20 formed as described above, in a non-operative state, as shown in Fig. 1 to Fig. 10, the plunger 22 of the hydraulic master cylinder 21 is brought into a state where the plunger 22 is biased in a direction toward the cylinder hole opening portion due to a repulsive force of the return spring 28, and an initial position of the plunger 22 is set by a contact between a stepped portion 22e of the plunger 22 and the circlip 29.

An initial position of the first rotary lever 41 is held by a tension of the first brake wire 7 connected to the first brake wire connecting portion 41e. An initial position of the second rotary lever 42 is set in such a manner that a guide portion contact surface 42k is brought into contact with the second rotary lever contact surface 21v of the rear-wheel-use brake wire guide portion 21u due to a repulsive force of the delay spring 32. The second rotary lever contact surface 21v and the guide portion contact surface 42k are arranged parallel to the cylinder center axis CL1. With respect to the knocker 43, the adjustment bolt contact surface 47b is brought into contact with a distal end portion of the adjustment bolt 46, and the receiving surface 43d is brought into contact with the knocker pushing and moving surface 42j with a slight clearance therebetween, and the plunger pushing and moving portion 43c is brought into contact with the plunger 22. The receiving surface 43d and the knocker pushing and moving surface 42j are respectively arranged parallel to a radial direction line D1 which passes the center of the fixing pin 33 in a non-operative state. At the time of operating the master cylinder unit 20, in an initial state where the receiving surface 43d and the knocker pushing and moving surface 42j are brought into contact with each other by eliminating the clearance, the contact surface between the receiving surface 43d and the knocker pushing and moving surface 42j is arranged on the radial direction line D1 which passes the center of fixing pin 33. With respect to the equalizer lever 44, in a state where the second rotary lever connecting portion 44a is connected to the equalizer connecting arm 42c, a tension of the second brake wire 9 and a tension of the rear-wheel-use brake wire 10 are balanced with each other so that the equalizer lever 44 is held in a horizontal state. As described previously, the delay spring 32 is in a state where the lower end side of the delay spring 32 is inclined leftward with respect to the center axis CL2 of the spring mounting hole 21p as viewed in a front view.

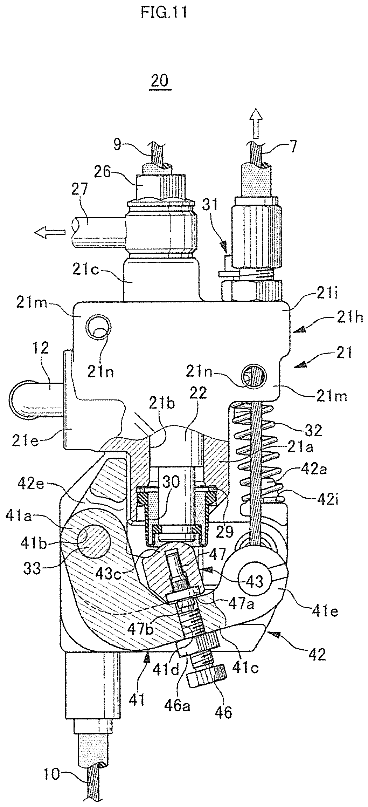

When the front-wheel-brake-use operator 4 is operated from a non-operative state, as shown in Fig. 11, the first brake wire 7 is towed, the first brake wire connecting portion 41e of the first rotary lever 41 is towed upward, and the first rotary lever 41 is rotated in a counterclockwise direction about the first rotary base portion 41a. Along with the rotation of the first rotary lever 41, the adjustment bolt 46 pushes and moves the adjustment bolt contact surface 47b of the knocker 43 thus rotating the knocker 43 in a counterclockwise direction about the third rotary base portion 43a so that the plunger pushing and moving portion 43c moves the plunger 22 by pushing. With such an operation, a working fluid whose fluid pressure is increased applies a fluid pressure to the front wheel brake 2 by means of the hydraulic pressure pipe 8 thus singly operating the front wheel brake 2.

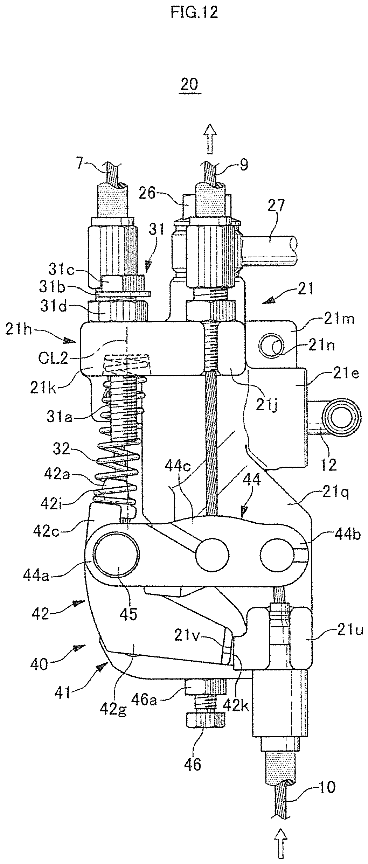

When the rear-wheel-brake-use operator 5 is operated, firstly, as shown in Fig. 12, the second brake wire 9 is towed, and the whole equalizer lever is towed upward by means of the second brake wire connecting portion 44c of the equalizer lever 44. Along with the towing of the equalizer lever 44, the rear-wheel-use brake wire 10 connected to the rear-wheel-use brake wire connecting portion 44b is towed so that the operation of the rear wheel brake 3 is started. At the same time, the equalizer connecting arm 42c of the second rotary lever 42 which is connected to the second rotary lever connecting portion 44a of the equalizer lever 44 is also towed upward. The second rotary lever 42 is rotated in a counterclockwise direction about the second rotary base portion 42b against a repulsive force of the delay spring 32. The knocker pushing and moving surface 42j is brought into contact with the receiving surface 43d of the knocker 43 and pushes and moves the receiving surface 43d of the knocker 43 so that the plunger 22 is pushed and moved. Accordingly, a working fluid whose pressure is increased applies a fluid pressure to the front wheel brake 2 by means of the hydraulic pressure pipe 8 thus operating the front wheel brake 2 in an interlocking manner with the operation of the rear wheel brake 3.

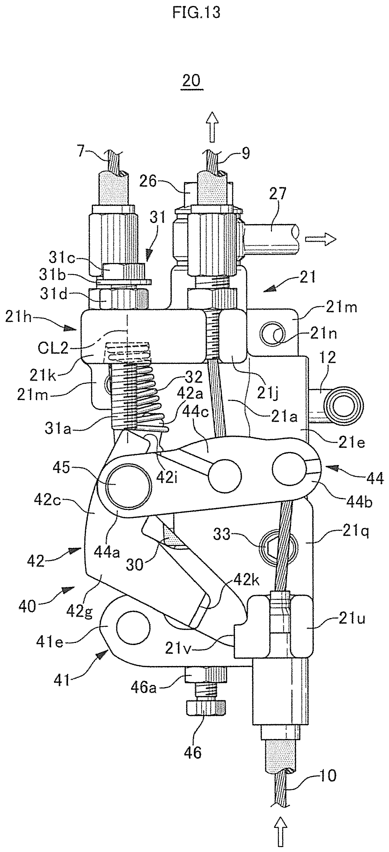

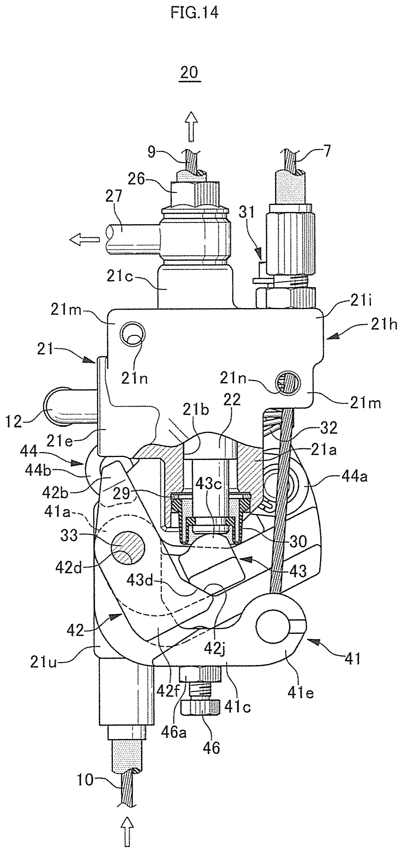

When the rear-wheel-brake-use operator 5 is further operated, as shown in Fig. 13 and Fig. 14, the equalizer lever 44 is further towed upward and, at the same time, the second rotary lever 42 is rotated in the counterclockwise direction about the second rotary base portion 42b, the delay spring mounting portion 42i is brought into contact with a distal end of a shaft portion of the stopper bolt 31 so that the rotation of the delay spring mounting portion 42i is restricted, and the rotation of the knocker 43 is stopped so that the applying of a fluid pressure to the front wheel brake 2 is restricted. In such an operation, the delay spring 32 is operated such that, along with the rotation of the second rotary lever 42, a center line of the delay spring 32 is temporarily arranged on the center axis CL2 of the spring mounting hole 21p and, thereafter, the delay spring 32 is brought into a state where a lower end side of the delay spring 32 is inclined rightward (toward the cylinder center axis CL1) with respect to the center axis CL2.

When the rear-wheel-brake-use operator 5 is further strongly operated, the rear wheel brake is operated as follows. That is, the delay spring mounting portion 42i is brought into contact with the distal end of the shaft portion of the stopper bolt 31 so that the rotation of the second rotary lever 42 is restricted whereby the position of the connecting pin 45 is fixed. Accordingly, the equalizer lever 44 is rotated in a clockwise direction about the connecting pin 45, and only the rear-wheel-use brake wire 10 is towed so that the rear wheel brake 3 is operated further strongly.

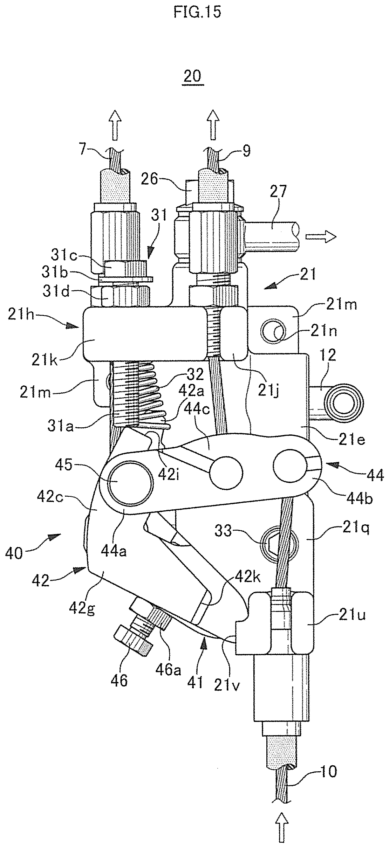

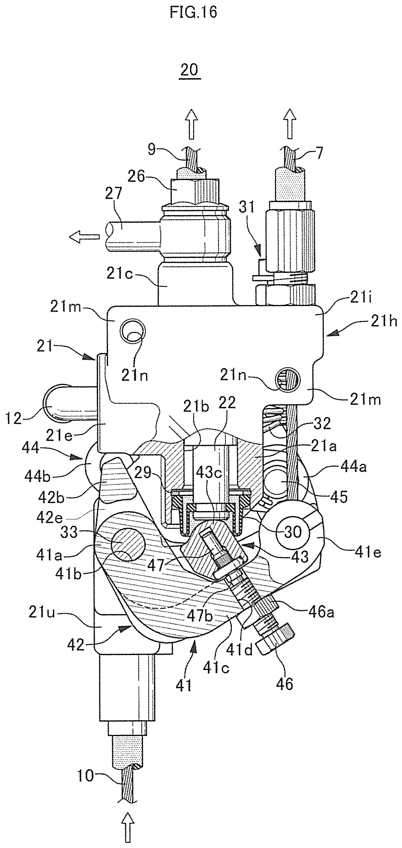

As shown in Fig. 15 and Fig. 16, when the front-wheel-brake-use operator 4 and the rear-wheel-brake-use operator 5 are simultaneously strongly operated, the first rotary lever 41 is singly rotated by being towed by the first brake wire 7 thus strongly operating the front wheel brake 2 by pushing and moving the plunger 22. At the same time, due to the movement of the equalizer lever 44 towed by the second brake wire 9, as described previously, the delay spring mounting portion 42i is brought into contact with the distal end of the shaft portion of the stopper bolt 3 so that the second rotary lever 42 is brought into a state where the rotation of the second rotary lever 42 is restricted and, thereafter, the equalizer lever 44 is rotated about the connecting pin 45 and tows the rear-wheel-use brake wire 10 thus strongly operating the rear wheel brake 3.

In this embodiment, the rear-wheel-use brake wire guide portion 21u is formed on a lower end portion of the front side lever holder 21q in a projecting manner, the second rotary lever contact surface 21v which sets an initial position of the second rotary lever 42 by coming into contact with the second rotary lever 42 is formed on the left side surface of the rear-wheel-use brake wire guide portion 21u on a center axis side of the cylinder body. Accordingly, even when the second rotary lever 42 is rotated about the fixing pin 33 at the time of operating the brake device, there is no possibility that a distal end side of the second rotary lever 42 projects toward an outer peripheral side of the cylinder body 21a and hence, the miniaturization of the master cylinder unit 20 can be realized. Further, there is no possibility that the distal end side of the second rotary lever 42 projects toward the outer peripheral side of the cylinder body 21a and interferes with other parts at the time of operating the brake device and hence, the degree of freedom in layout of the master cylinder unit 20 can be enhanced. Further, the lever holders 21q, 21r are disposed on a cylinder hole opening side of the cylinder body 21a, and the first rotary lever 41, the second rotary lever 42, the knocker 43, and the rear-wheel-use brake wire guide portion 21u can be arranged in a state where these parts are disposed close to the cylinder hole opening side and hence, the miniaturization of the master cylinder unit 20 can be realized. Since the plunger-type hydraulic master cylinder is used as the hydraulic master cylinder 21, a length of the cylinder body 21a in the cylinder center axis CL1 direction can be decreased. Further, in this embodiment, the first seal groove 23a in which the first cup seal 23 is fitted and the second seal groove 24a in which the second cup seal 24 is fitted are formed close to the fluid through hole 21d connected to the reservoir 11, and the replenishing chamber 21f which communicates with the first seal groove 23a, the second seal groove 24a and the fluid through hole 21d is formed on the inner peripheral surface of the cylinder hole 21b and hence, a length of the cylinder body 21a in a cylinder center axis CL1 direction can be further decreased.

Here, the present invention is not limited to the above-mentioned embodiment, and it is possible that the hydraulic master cylinder is not a plunger-type hydraulic master cylinder. A mounting direction and a mounting position and the like of the master cylinder unit on a vehicle body are arbitrarily determined. It is also possible that the rear wheel brake is formed of a hydraulic brake and the front wheel brake is formed of a mechanical brake. Further, the second brake connecting means and the mechanical brake side connecting means of the present invention are not limited to the brake wire described in the above-mentioned embodiment.

### Reference Signs List

- 1:: brake device
- 2:: front wheel brake
- 2a:: disc rotor
- 2b:: caliper body
- 3:: rear wheel brake
- 3a:: back plate
- 3b:: brake shoe
- 3c:: anchor pin
- 4:: front-wheel-brake-use operator
- 4a:: operation lever
- 5:: rear-wheel-brake-use operator
- 5a:: operation lever
- 6:: handle bar
- 7:: first brake wire
- 8:: hydraulic pressure pipe
- 9:: second brake wire
- 10:: rear-wheel-use brake wire
- 11:: reservoir
- 12:: connector
- 12a:: seal member
- 20:: master cylinder unit
- 21:: hydraulic master cylinder
- 21a:: cylinder body
- 21b:: cylinder hole
- 21c:: union boss portion
- 21d:: fluid through hole
- 21e:: boss portion
- 21f:: replenishing oil chamber
- 21g:: union hole
- 21h:: upper bracket
- 21i:: first wire guide portion
- 21j:: second wire guide portion
- 21k:: stopper bolt mounting portion
- 21m:: vehicle body mounting bracket
- 21n:: bolt hole
- 21p:: spring mounting hole
- 21q, 21r:: lever holder
- 21s:: through hole
- 21t:: female threaded hole
- 21u:: rear wheel brake wire guide portion
- 21v:: second rotary lever contact surface
- 22:: plunger
- 22a:: recessed portion
- 22b:: communication port
- 22c:: sleeve portion
- 22d:: small-diameter shaft portion
- 22e:: stepped portion
- 23:: first cup seal
- 23a:: first seal groove
- 24:: second cup seal
- 24a:: second seal groove
- 25:: hydraulic pressure chamber
- 26:: banjo bolt
- 27:: banjo
- 28:: return spring
- 29:: circlip
- 30:: boot
- 31:: stopper bolt
- 31a:: shaft portion
- 31b:: seat surface
- 31c:: head portion
- 31d:: nut member
- 32:: delay spring
- 33:: fixing pin
- 33a:: nut member
- 40:: lever mechanism
- 41:: first rotary lever
- 41a:: first rotary base portion
- 41b:: insertion hole
- 41c:: adjustment bolt mounting portion
- 41d:: female threaded portion
- 41e:: first brake wire connecting portion
- 42:: second rotary lever
- 42a:: spring mounting boss
- 42b:: second rotary base portion
- 42c:: equalizer connecting arm
- 42d:: insertion hole
- 42e:: front side arm portion
- 42f:: back side arm portion
- 42g:: connecting arm
- 42h:: insertion hole
- 42i:: delay spring mounting portion
- 42j:: knocker pushing and moving surface
- 42k:: guide portion contact surface
- 43:: knocker
- 43a:: third rotary base portion
- 43b:: insertion hole
- 43c:: plunger pushing and moving portion
- 43d:: receiving surface
- 44:: equalizer lever
- 44a:: second rotary lever connecting portion
- 44b:: rear-wheel-use brake wire connecting portion
- 44c:: second brake wire connecting portion
- 44d:: insertion hole
- 45:: connecting pin
- 45a:: retainer ring
- 46:: adjustment bolt
- 46a:: nut member
- 47:: pin member
- 47a:: head portion
- 47b:: adjustment bolt contact surface

## Claims

1. A brake device (1) for a vehicle with handle bars where either one of a front wheel brake (2) and a rear wheel brake (3) is formed of a hydraulic brake and the other brake is formed of a mechanical brake, the hydraulic brake is operated singly by operating a first brake operator (4) by means of a master cylinder unit (20) formed by combining a hydraulic master cylinder (21) and a lever mechanism (40), the hydraulic brake and the mechanical brake are operated in an interlocking manner by operating a second brake operator (5) by means of the master cylinder unit (20), the lever mechanism (40) includes a first rotary lever (41), a second rotary lever (42), a knocker (43) and an equalizer lever (44), a first brake connecting means connected to the first brake operator (4) is connected to the first rotary lever (41), a piston (22) of the hydraulic master cylinder (21) is operated by operating the first brake operator (4) by means of the knocker (43) which the first rotary lever (41) moves by pushing thus singly operating the hydraulic brake, a second brake connecting means connected to the second brake operator (5), a mechanical brake side connecting means connected to the mechanical brake and the second rotary lever (42) are connected to the equalizer lever (44), the mechanical brake side connecting means is towed by operating the second brake operator (5) by means of the equalizer lever (44) thus operating the mechanical brake, and the equalizer lever (44) rotates the second rotary lever (42) so that the piston (22) of the hydraulic master cylinder (21) is operated by means of the knocker (43) which the second rotary lever (42) moves by pushing thus operating the hydraulic brake in an interlocking manner with the operation of the mechanical brake, wherein a guide portion (21u) which guides the mechanical brake side connecting means toward the equalizer lever (44) is mounted on a cylinder body (21a) of the hydraulic master cylinder (21) in a projecting manner, a second rotary lever contact surface (21v) brought into contact with the second rotary lever (42) is formed on a cylinder body (21a) center axis side of the guide portion (21u), the second rotary lever (42) is biased so as to rotate in a non-operating direction about a fixing pin (33) which forms a rotational fulcrum due to a repulsive force of a delay spring (32) disposed between the second rotary lever (42) and the cylinder body (21a), and a guide portion contact surface (42k) which sets an initial position of the second rotary lever (42) by being brought into contact with the second rotary lever contact surface (21v) is formed on the second rotary lever (42).

2. The brake device (1) for a vehicle according to claim 1, wherein a lever holder (21q, 21r) which rotatably and pivotally supports the first rotary lever (41), the second rotary lever (42) and the knocker (43) by means of the fixing pin (33) is mounted on a cylinder hole opening side of the cylinder body (21a) in a projecting manner, and the guide portion (21u) is formed on a projecting side end portion of the lever holder (21q, 21r).

3. The brake device (1) for a vehicle according to claim 1 or 2, wherein the hydraulic master cylinder (21) is a plunger-type hydraulic master cylinder (21).

## Patentansprüche

1. Bremsvorrichtung (1) für ein Fahrzeug mit Lenker, bei der entweder eine Vorderradbremse (2) oder eine Hinterradbremse (3) aus einer hydraulischen Bremse gebildet ist und die andere Bremse aus einer mechanischen Bremse gebildet ist, wobei die hydraulische Bremse durch Betätigen einer ersten Bremsbetätigungseinrichtung (4) mittels einer Hauptzylindereinheit (20) einzeln betätigt wird, die durch Kombinieren eines hydraulischen Hauptzylinders (21) und eines Hebelmechanismus (40) gebildet ist, die hydraulische Bremse und die mechanische Bremse durch formschlüssiges Betätigen einer zweiten Bremsbetätigungseinrichtung (5) mittels der Hauptzylindereinheit (20) betätigt werden, der Hebelmechanismus (40) einen ersten Drehhebel (41), einen zweiten Drehhebel (42), einen Klopfer (43) und einen Ausgleichshebel (44) umfasst, eine erste Bremsverbindungseinrichtung, die mit der ersten Bremsbetätigungseinrichtung (4) verbunden ist, mit dem ersten Drehhebel (41) verbunden ist, ein Kolben (22) des hydraulischen Hauptzylinders (21) durch Betätigen der ersten Bremsbetätigungseinrichtung (4) mittels des Klopfers (43) betätigt wird, der den ersten Drehhebel (41) durch Drücken bewegt, damit die hydraulische Bremse einzeln betätigt wird, eine zweite Bremsverbindungseinrichtung, die mit der zweiten Bremsbetätigungseinrichtung (5) verbunden ist, eine mechanische bremsseitige Verbindungseinrichtung, die mit der mechanischen Bremse verbunden ist, und der zweite Drehhebel (42) mit dem Ausgleichshebel (44) verbunden sind, die mechanische bremsseitige Verbindungseinrichtung durch Betätigen der zweiten Bremsbetätigungseinrichtung (5) mittels des Ausgleichshebels (44) gezogen wird, damit die mechanische Bremse betätigt wird, und der Ausgleichshebel (44) den zweiten Drehhebel (42) dreht, sodass der Kolben (22) des hydraulischen Hauptzylinders (21) mittels des Klopfers (43) betätigt wird, der den zweiten Drehhebel (42) durch Drücken bewegt, wodurch die hydraulische Bremse mittels der Betätigung der mechanischen Bremse formschlüssig betätigt wird, wobei ein Führungsabschnitt (21u), der die mechanische bremsseitige Verbindungseinrichtung in Richtung des Ausgleichshebels (44) führt, an einem Zylinderkörper (21a) des hydraulischen Hauptzylinders (21) vorragend montiert ist, eine zweite Drehhebelkontaktfläche (21v), die mit dem zweiten Drehhebel (42) in Berührung gebracht ist, an einer Mittelachsenseite des Zylinderkörpers (21a) des Führungsabschnitts (21u) ausgebildet ist, der zweite Drehhebel (42) zum Drehen in einer Nichtbetätigungsrichtung um einen Befestigungsstift (33) beaufschlagt ist, der einen Drehpunkt aufgrund einer Abstoßungskraft einer Verzögerungsfeder (32), die zwischen dem zweiten Drehhebel (22) und dem Zylinderkörper (21a) angeordnet ist, bildet, und eine Führungsabschnitt-Kontaktfläche (42k), die eine Anfangsposition des zweiten Drehhebels (42) dadurch einstellt, dass diese mit der zweiten Drehhebel-Kontaktfläche (21v) in Berührung gebracht wird, am zweiten Drehhebel (42) ausgebildet ist.

2. Bremsvorrichtung (1) für ein Fahrzeug nach Anspruch 1, wobei ein Hebelhalter (21q, 21r), der den ersten Drehhebel (41), den zweiten Drehhebel (42) und den Klopfer (43) mittels des Befestigungsstifts (33) drehbar und schwenkbar abstützt, auf einer Zylinderöffnung-Öffnungsseite des Zylinderkörpers (21a) vorragend montiert ist, und der Führungsabschnitt (21u) an einem vorsprungseitigen Endabschnitt des Hebelhalters (21q, 21r) ausgebildet ist.

3. Bremsvorrichtung (1) für ein Fahrzeug nach Anspruch 1 oder 2, wobei der hydraulische Hauptzylinder (21) ein hydraulischer Kolben-Hauptzylinder (21) ist.

## Revendications

1. Dispositif de freinage (1) pour un véhicule ayant un guidon où l'un d'un frein de roue avant (2) et d'un frein de roue arrière (3) est formé d'un frein hydraulique et l'autre frein est formé d'un frein mécanique, le frein hydraulique est actionné individuellement en actionnant un premier actionneur de frein (4) au moyen d'une unité maître-cylindre (20) formée en combinant un maître-cylindre hydraulique (21) et un mécanisme à levier (40), le frein hydraulique et le frein mécanique sont actionnés d'une manière verrouillée en actionnant un deuxième actionneur de frein (5) au moyen de l'unité maître-cylindre (20), le mécanisme à levier (40) comporte un premier levier rotatif (41), un deuxième levier rotatif (42), un percuteur (43) et un levier d'égaliseur (44), un premier moyen de raccordement de frein raccordé au premier actionneur de frein (4) est raccordé au premier levier rotatif (41), un piston (22) du maître-cylindre hydraulique (21) est actionné en actionnant le premier actionneur de frein (4) au moyen du percuteur (43) que le premier levier rotatif (41) déplace en le poussant, actionnant ainsi individuellement le frein hydraulique, un deuxième moyen de raccordement de frein raccordé au deuxième actionneur de frein (5), un moyen de raccordement côté frein mécanique raccordé au frein mécanique et le deuxième levier rotatif (42) sont raccordés au levier d'égaliseur (44), le moyen de raccordement côté frein mécanique est tiré en actionnant le deuxième actionneur de frein (5) au moyen du levier d'égaliseur (44) actionnant ainsi le frein mécanique, et le levier d'égaliseur (44) fait tourner le deuxième levier rotatif (42) de sorte que le piston (22) du maître-cylindre hydraulique (21) soit actionné au moyen du percuteur (43) que le deuxième levier rotatif (42) déplace en le poussant, actionnant ainsi le frein hydraulique d'une manière verrouillée avec l'actionnement du frein mécanique, où une partie de guidage (21u) qui guide le moyen de raccordement côté frein mécanique vers le levier d'égaliseur (44) est montée sur un corps de cylindre (21a) du maître-cylindre hydraulique (21) d'une manière saillante, une surface de contact de deuxième levier rotatif (21v) amenée en contact avec le deuxième levier rotatif (42) est formée sur un côté de l'axe central du corps de cylindre (21a) de la partie de guidage (21u), le deuxième levier rotatif (42) est sollicité de manière à tourner dans une direction de non-fonctionnement autour d'une broche de fixation (33) qui forme un point d'appui rotatif en raison d'une force répulsive d'un ressort à retardement (32) disposé entre le deuxième levier rotatif (42) et le corps de cylindre (21a), et une surface de contact de partie de guidage (42k) qui définit une position initiale du deuxième levier rotatif (42) en étant amené en contact avec la surface de contact de deuxième levier rotatif (21v) est formée sur le deuxième levier rotatif (42).

2. Dispositif de freinage (1) pour un véhicule selon revendication 1, dans lequel un support de levier (21q, 21r) qui supporte en rotation et en pivotement le premier levier rotatif (41), le deuxième levier rotatif (42) et le percuteur (43) au moyen de la broche de fixation (33) est monté sur un côté d'ouverture de trou de cylindre du corps de cylindre (21a) d'une manière saillante, et la partie de guidage (21u) est formée sur une partie d'extrémité en saillie du support de levier (21q, 21r).

3. Dispositif de freinage (1) pour un véhicule selon revendication 1 ou 2, dans lequel le maître-cylindre hydraulique (21) est un maître-cylindre hydraulique du type à plongeur (21).
